# EUROPEAN PATENT APPLICATION

(11) **EP 4 351 132 A1**
(43) Date of publication of application: **10.04.2024**
(21) Application number: 22816204.6
(22) Date of filing: 02.06.2022
(51) Int. Cl.: H04N 13/327, B60K 35/00, G02B 27/01, G02B 30/30, H04N 13/125, H04N 13/302, H04N 13/366

(54) **METHOD FOR CONFIGURING THREE-DIMENSIONAL IMAGE DISPLAY SYSTEM**

(30) Priority: 02.06.2021 JP 2021093023
(71) Applicant: Kyocera Corporation, Kyoto-shi Kyoto 612-8501 (JP)
(72) Inventor: KUSAFUKA, Kaoru, Kyoto-shi, Kyoto 612-8501 (JP); SATOU, Akinori, Kyoto-shi, Kyoto 612-8501 (JP); HAYASHISHITA, Ayuki, Kyoto-shi, Kyoto 612-8501 (JP)
(74) Representative: TBK
(86) International application number: PCT/JP2022/022529
(87) International publication number: WO 2022/255459

(57) **Abstract**

A method for setting a three-dimensional image display system includes sequentially displaying, with a second controller, a plurality of test images on a display panel, and sequentially capturing, with a second camera, the plurality of test images to obtain a plurality of second images. The method includes extracting luminance from the plurality of second images, and creating luminance plots based on the extracted luminance. A third controller calculates phase values based on the created luminance plots. The third controller stores the calculated phase values with corresponding coordinates on the display panel into a storage as a phase distribution.

## Description

### TECHNICAL FIELD

The present disclosure relates to a method for setting a three-dimensional (3D) image display system.

### SUMMARY

In one embodiment of the present disclosure, a method is for setting a three-dimensional image display system. The three-dimensional image display system includes a display panel that displays a parallax image including a right-eye image and a left-eye image, an optical panel that defines a traveling direction of light for each of the right-eye image and the left-eye image, a reflective plate that reflects the right-eye image and the left-eye image with the traveling direction of light being defined, a first camera that captures a first image including an image of an area being expected to include a face of a user of the three-dimensional image display system, a second camera that captures a second image, a first controller that detects, based on the first image, a position of at least one of eyes of the user as a first position, a second controller that generates, based on a first distribution of a first parameter and the first position, the parallax image including the right-eye image and the left-eye image, and a third controller that calculates a second distribution of the first parameter. The method includes moving the second camera to a position to allow the parallax image reflected from the reflective plate to be captured, sequentially displaying a plurality of test images on the display panel and sequentially capturing, with the second camera, the plurality of test images reflected from the reflective plate to obtain a plurality of the second images, calculating the second distribution based on the plurality of second images, and replacing the first distribution with the calculated second distribution.

### ADVANTAGEOUS EFFECT

In one embodiment of the present disclosure, the method for setting the three-dimensional image display system allows the user to properly view a three-dimensional image.

### BRIEF DESCRIPTION OF THE DRAWINGS

FIG. 1 is a schematic diagram of an example movable body incorporating a 3D image display system.
FIG. 2 is a schematic diagram of an example 3D image display system.
FIG. 3 is a schematic diagram describing the relationship between the eyes of a driver, a display panel, and a barrier.
FIG. 4A is a schematic front view of the display panel.
FIG. 4B is a diagram of left-eye viewing areas.
FIG. 4C is a diagram of right-eye viewing areas.
FIG. 5A is a schematic diagram of example left-eye viewing areas.
FIG. 5B is a diagram of left-eye viewing areas with deviating viewable subpixels.
FIG. 6A is a diagram of an example test image.
FIG. 6B is a diagram of an example test image.
FIG. 6C is a diagram of an example test image.
FIG. 6D is a diagram of an example test image.
FIG. 6E is a diagram of an example test image.
FIG. 6F is a diagram of an example test image.
FIG. 6G is a diagram of an example test image.
FIG. 6H is a schematic diagram of example left-eye viewing areas.
FIG. 7A is a diagram illustrating the positions of subpixels in a left-eye viewing area.
FIG. 7B is a graph showing an example plot indicating luminance.
FIG. 8A is a diagram illustrating the positions of other example subpixels in a left-eye viewing area.
FIG. 8B is a graph showing another example plot indicating luminance.
FIG. 9 is a diagram of an example phase distribution.
FIG. 10 is a flowchart of a setting process performed by the 3D image display system.
FIG. 11 is a schematic diagram of another example movable body incorporating the 3D image display system.

### DESCRIPTION OF EMBODIMENTS

The objects, features, and advantages of the present disclosure will become more apparent from the following detailed description and the drawings.

With a known three-dimensional (3D) image display system, a part of image light emitted from a display panel reaches the right eye of a user, and another part of the image light emitted from the display panel reaches the left eye of the user. This structure generates parallax between the two eyes of the user for the user to view a 3D image.

Image light from the display panel travels in the direction defined by, for example, an optical panel, and a part of the light reaches the right eye or the left eye of the user. The image light emitted from the display panel can also reach the two eyes of the user indirectly with, for example, a reflective plate.

During assembly or installation of the 3D image display system, the optical panel or the reflective plate may have any positional deviation. Although no such positional deviation occurs during assembly or installation or such a positional deviation is negligible in viewing a 3D image, the optical panel or the reflective plate may positionally deviate over time or may deform after use of the 3D image display system. Such a positional deviation or deformation may prevent the user from properly viewing a 3D image.

One or more aspects of the present disclosure are directed to a method for setting a 3D image display system that allows a user to properly view a 3D image.

One or more embodiments of the present disclosure will now be described in detail with reference to the drawings. The drawings used herein are schematic and are not drawn to scale relative to the actual size of each component.

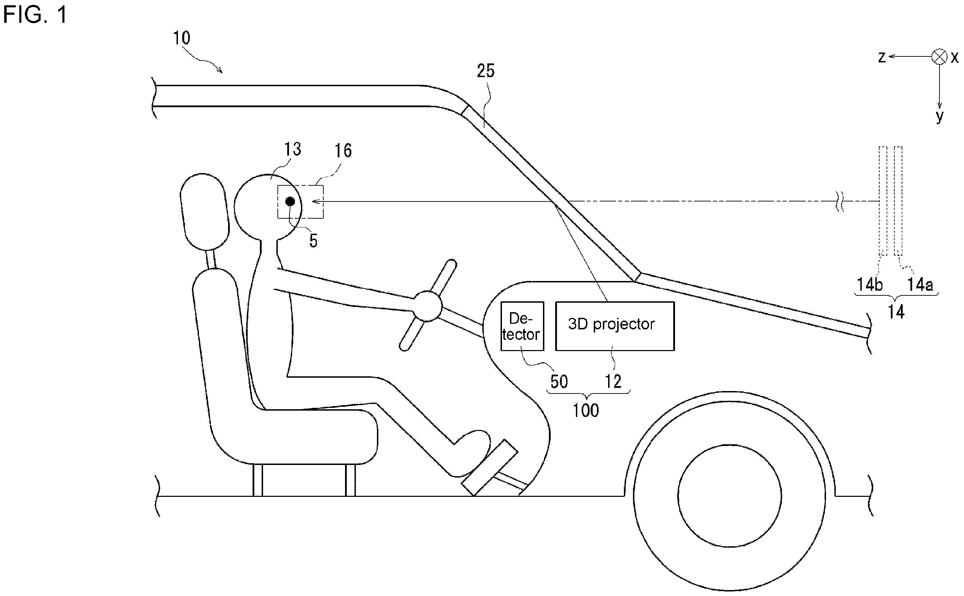

A 3D image display system 100 implements a setting method according to one embodiment of the present disclosure. FIG. 1 is a schematic diagram of an example movable body incorporating the 3D image display system. As illustrated in FIG. 1, the 3D image display system 100 may be mounted on a movable body 10. The 3D image display system 100 may include, for example, a detector 50 and a 3D projector 12.

Examples of the movable body in the present disclosure include a vehicle, a vessel, and an aircraft. Examples of the vehicle include an automobile, an industrial vehicle, a railroad vehicle, a community vehicle, and a fixed-wing aircraft traveling on a runway. Examples of the automobile include a passenger vehicle, a truck, a bus, a motorcycle, and a trolley bus. Examples of the industrial vehicle include an industrial vehicle for agriculture and an industrial vehicle for construction. Examples of the industrial vehicle include a forklift and a golf cart. Examples of the industrial vehicle for agriculture include a tractor, a cultivator, a transplanter, a binder, a combine, and a lawn mower. Examples of the industrial vehicle for construction include a bulldozer, a scraper, a power shovel, a crane vehicle, a dump truck, and a road roller. Examples of the vehicle include a human-powered vehicle. The classification of the vehicle is not limited to the above examples. Examples of the automobile include an industrial vehicle travelling on a road. One type of vehicle may fall within multiple classes. Examples of the vessel include a jet ski, a boat, and a tanker. Examples of the aircraft include a fixed-wing aircraft and a rotary-wing aircraft. In the example described below, the movable body 10 is a passenger vehicle. The movable body 10 may be any of the above examples rather than a passenger vehicle.

The detector 50 includes a first camera 11A and a first controller 15. The first camera 11A captures a first image including an area being expected to include the face of a user 13 of the 3D image display system 100. In the present embodiment, the user 13 may be, for example, the driver of the movable body 10 that is a passenger vehicle. The area being expected to include the face of the driver may be, for example, around an upper portion of the driver's seat. The first camera 11A may be installed in the movable body 10. The first camera 11A may be installed at any position inside or outside the movable body 10.

The first camera 11A may be a visible light camera or an infrared camera. The first camera 11A may function both as a visible light camera and an infrared camera. The first camera 11A may include, for example, a charge-coupled device (CCD) image sensor or a complementary metal-oxide semiconductor (CMOS) image sensor.

The first image captured with the first camera 11A is output to the first controller 15. The first controller 15 detects, based on the first image, the position of at least one of eyes 5 of the user 13 as a first position. The detection result obtained by the detector 50 may be coordinate information indicating the pupil positions of the eyes 5 of the user 13.

The detector 50 may include, for example, a sensor. The sensor may be, for example, an ultrasonic sensor or an optical sensor. The first camera 11A may detect the position of the head of the user 13 with the sensor, and may detect the positions of the eyes 5 of the user 13 based on the position of the head. The first camera 11A may use two or more sensors to detect the positions of the eyes 5 of the user 13 as coordinates defined in a 3D space.

The detector 50 may output coordinate information about the detected pupil positions of the eyes 5 to the 3D projector 12. The 3D projector 12 may control an image to be projected based on the coordinate information. The detector 50 may output information indicating the pupil positions of the eyes 5 to the 3D projector 12 through wired or wireless communication. The wired communication may include, for example, communication using a controller area network (CAN).

The detector 50 may include the first controller 15 that is an external device. The first camera 11A may output a captured image to the external first controller 15. The external first controller 15 may detect the pupil positions of the eyes 5 of the user 13 based on the image output from the first camera 11A. The external first controller 15 may output the coordinate information about the detected pupil positions of the eyes 5 to the 3D projector 12. The 3D projector 12 may control an image to be projected based on the coordinate information. The first camera 11A may output the captured first image to the external first controller 15 through wired or wireless communication. The external first controller 15 may output the coordinate information to the 3D projector 12 through wired or wireless communication. Wired communication may include, for example, communication using a CAN.

The 3D projector 12 may be at any position inside or outside the movable body 10. For example, the 3D projector 12 may be inside the dashboard in the movable body 10. The 3D projector 12 emits image light toward a windshield 25.

The windshield 25 is a reflective plate that reflects image light emitted from the 3D projector 12. The image light reflected from the windshield 25 reaches an eye box 16. The eye box 16 is an area defined in a real space in which the eyes 5 of the user 13 are expected to be located based on, for example, the body shape, posture, and changes in the posture of the user 13. The eye box 16 may have any shape. The eye box 16 may include a two-dimensional (2D) area or a 3D area. The solid arrow in FIG. 1 indicates a path traveled by at least a part of image light emitted from the 3D projector 12 to reach the eye box 16. The path traveled by image light is also referred to as an optical path. The image light emitted from the 3D projector 12 represents a parallax image including a right-eye image and a left-eye image. With the eyes 5 of the user 13 in the eye box 16, the user 13 can view a virtual image 14 with the image light of the parallax image reaching the eye box 16. The virtual image 14 is on a path extending frontward from the movable body 10 in alignment with the path from the windshield 25 to the eyes 5 (the straight two-dot-dash line in the figure). The 3D projector 12 can function as a head-up display that allows the user 13 to view the virtual image 14. In FIG. 1, the direction in which the eyes 5 of the user 13 are aligned corresponds to x-direction. The vertical direction corresponds to y-direction. The imaging range of the first camera 11A includes the eye box 16.

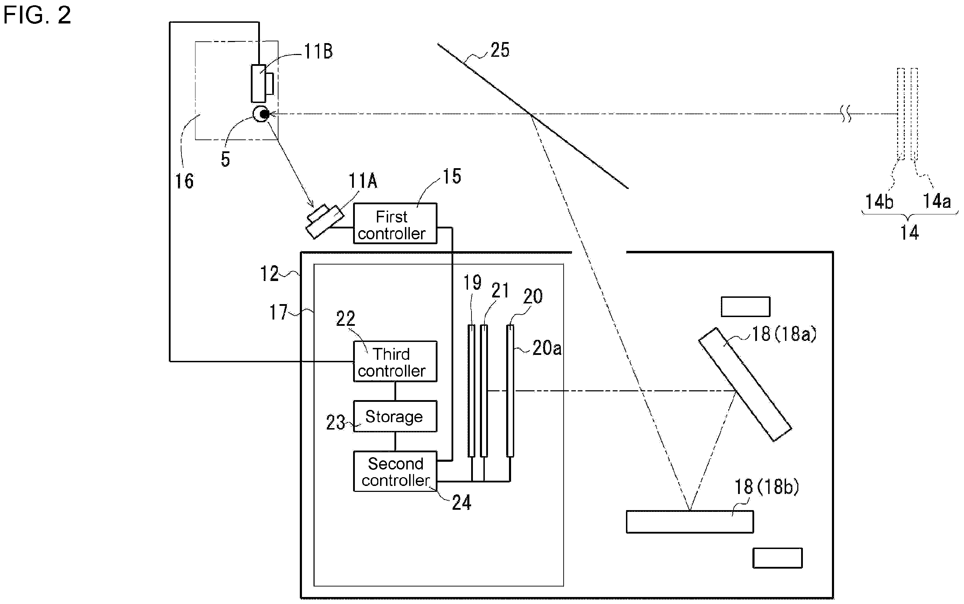

As illustrated in FIG. 2, the 3D projector 12 includes a 3D display device 17 and an optical element 18. The 3D display device 17 may include a backlight 19, a display panel 20 including a display surface 20a, a barrier 21, and a second controller 24. The 3D display device 17 may further include a storage 23. The second controller 24 generates a parallax image to appear on the display panel 20.

The optical element 18 may include, for example, a first mirror 18a and a second mirror 18b. At least either the first mirror 18a or the second mirror 18b may have optical power. In the present embodiment, the first mirror 18a is a concave mirror having optical power. The second mirror 18b is a plane mirror. The optical element 18 may function as a magnifying optical system that magnifies a parallax image displayed by the 3D display device 17. The two-dot-dash arrow in FIG. 2 indicates a path traveled by at least a part of image light emitted from the 3D display device 17 to be reflected from the first mirror 18a and the second mirror 18b and then exit the 3D projector 12. The image light emitted from the 3D projector 12 reaches the windshield 25, is reflected from the windshield 25, and then reaches the eyes 5 of the user 13. This allows the user 13 to view the parallax image displayed by the 3D display device 17.

The optical element 18 and the windshield 25 allow image light emitted from the 3D display device 17 to reach the eyes 5 of the user 13. The optical system may control the traveling direction of image light to magnify or reduce an image viewable by the user 13. The optical system may control the traveling direction of image light to deform an image viewable by the user 13 based on a predetermined matrix.

The optical element 18 may have a structure different from the illustrated structure. The mirror may include a concave mirror, a convex mirror, or a plane mirror. The concave mirror or the convex mirror may be at least partially spherical or aspherical. The optical element 18 may be one element or may include three or more elements, in place of two elements. The optical element 18 may include a lens in place of or in addition to a mirror. The lens may be a concave lens or a convex lens. The lens may be at least partially spherical or aspherical.

The backlight 19 is farther from the user 13 than the display panel 20 and the barrier 21 on the optical path of image light. The backlight 19 emits light toward the barrier 21 and the display panel 20. At least a part of light emitted from the backlight 19 travels along the optical path indicated by the two-dot-dash line and reaches the eyes 5 of the user 13. The backlight 19 may include a light emitter such as a light-emitting diode (LED), an organic EL element, or an inorganic EL element. The backlight 19 may have any structure that allows control of the light intensity and the light intensity distribution.

The display panel 20 may be, for example, a liquid-crystal device such as a liquid-crystal display (LCD). In the present embodiment, the display panel 20 includes a transmissive liquid-crystal display panel. The display panel 20 is not limited to this, and may include any of various display panels.

The display panel 20 includes multiple pixels and changes the light transmittance of light from the backlight 19 incident on each pixel to emit image light that then reaches the eyes 5 of the user 13. The user 13 views an image formed by image light emitted from each pixel in the display panel 20.

The barrier 21 is an optical panel that defines the traveling direction of incident light. As illustrated in the example in FIG. 2, with the barrier 21 being nearer the backlight 19 than the display panel 20, light emitted from the backlight 19 enters the barrier 21 and then enters the display panel 20. In this case, the barrier 21 blocks or attenuates a part of light emitted from the backlight 19 and transmits another part of the light to the display panel 20. The display panel 20 emits incident light traveling in the direction defined by the barrier 21 as image light traveling in the same direction. With the display panel 20 being nearer the backlight 19 than the barrier 21, light emitted from the backlight 19 enters the display panel 20 and then enters the barrier 21. In this case, the barrier 21 blocks or attenuates a part of image light from the display panel 20 and transmits another part of the image light to the eyes 5 of the user 13.

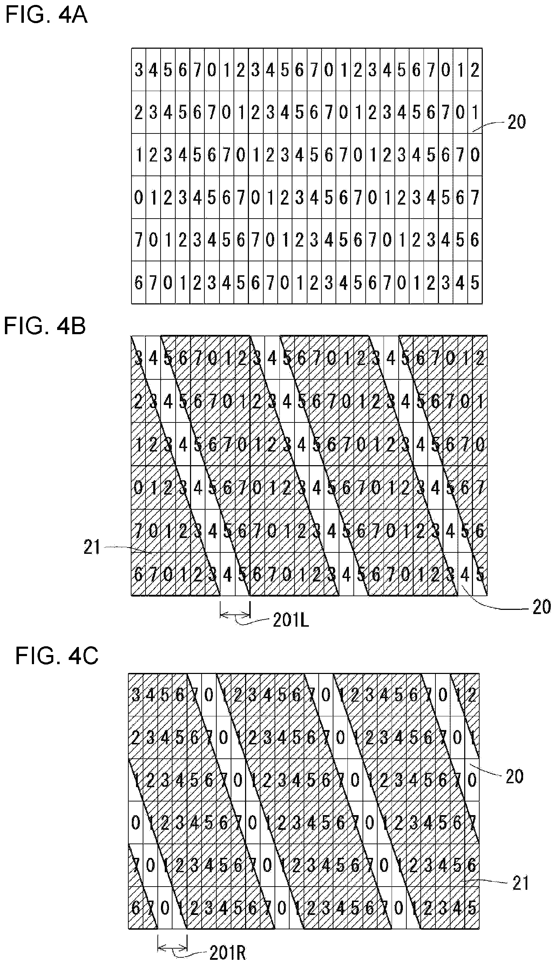

Irrespective of whether the display panel 20 or the barrier 21 is nearer the user 13, the barrier 21 can control the traveling direction of image light. The barrier 21 allows a part of image light from the display panel 20 to reach one of a left eye 5L and a right eye 5R (refer to FIGs. 4A to 4C) of the user 13, and another part of the image light to reach the other of the left eye 5L and the right eye 5R of the user 13. In other words, the barrier 21 directs at least a part of image light toward the left eye 5L of the user 13 and toward the right eye 5R of the user 13. The left eye 5L is also referred to as a first eye, and the right eye 5R as a second eye. In the present embodiment, the barrier 21 is located between the backlight 19 and the display panel 20. In other words, light emitted from the backlight 19 first enters the barrier 21 and then enters the display panel 20.

The barrier 21 defines the traveling direction of image light to allow each of the left eye 5L and the right eye 5R of the user 13 to receive different image light. Each of the left eye 5L and the right eye 5R of the user 13 can thus view a different image. This allows the eyes 5 of the user 13 to view a first virtual image 14a located farther in the negative z-direction than the windshield 25. The first virtual image 14a corresponds to the image appearing on the display surface 20a. The barrier 21 form a second virtual image 14b in front of the windshield 25 and nearer the windshield 25 than the first virtual image 14a. As illustrated in FIG. 2, the user 13 can view an image with the display panel 20 to be at an apparent position that is the position of the first virtual image 14a and with the barrier 21 to be at an apparent position that is the position of the second virtual image 14b.

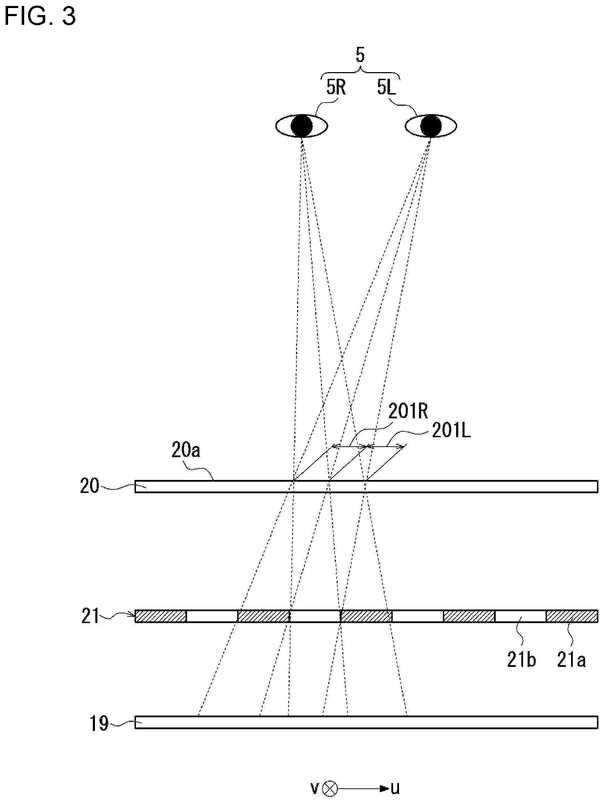

As illustrated in FIG. 3, the display panel 20 includes left-eye viewing areas 201L viewable with the left eye 5L of the user 13 and right-eye viewing areas 201R viewable with the right eye 5R of the user 13 on the display surface 20a. The display panel 20 displays a parallax image including left-eye images viewable with the left eye 5L of the user 13 and right-eye images viewable with the right eye 5R of the user 13. A parallax image refers to an image projected toward the left eye 5L and the right eye 5R of the user 13 to generate parallax between the two eyes of the user 13. The display panel 20 displays left-eye images on the left-eye viewing areas 201L and right-eye images on the right-eye viewing areas 201R. In other words, the display panel 20 displays a parallax image on the left-eye viewing areas 201L and the right-eye viewing areas 201R. The left-eye viewing areas 201L and the right-eye viewing areas 201R are arranged in u-direction indicating a parallax direction. The left-eye viewing areas 201L and the right-eye viewing areas 201R may extend in v-direction orthogonal to the parallax direction, or in a direction inclined with respect to v-direction at a predetermined angle. In other words, the left-eye viewing areas 201L and the right-eye viewing areas 201R may be arranged alternately in a predetermined direction including a component in the parallax direction. The pitch between the alternately arranged left-eye viewing areas 201L and right-eye viewing areas 201R is also referred to as a parallax image pitch. The left-eye viewing areas 201L and the right-eye viewing areas 201R may be spaced from each other or adjacent to each other. The display panel 20 may further include a display area to display a planar image on the display surface 20a. The planar image generates no parallax between the eyes 5 of the user 13 and is not viewed stereoscopically.

FIG. 4A is a schematic front view of the display panel. As illustrated in FIG. 4A, the display panel 20 includes multiple subpixels arranged in a grid in the horizontal and vertical directions. Each subpixel has one of the colors, red (R), green (G), or blue (B). One pixel may be a set of three subpixels with R, G, and B. For example, multiple subpixels included in one pixel are arranged in the horizontal direction. For example, subpixels having the same color are arranged in the vertical direction. A subpixel group includes multiple subpixels. The subpixel groups are repeatedly arranged in the horizontal direction. The subpixel groups are repeatedly arranged in the vertical direction at positions shifted by one subpixel in the horizontal direction from the corresponding subpixels. In the present embodiment, each subpixel group includes eight subpixels. Each pixel is assigned with an identification number of, for example, 0 to 7.

FIG. 4B illustrates the left-eye viewing areas 201L. FIG. 4C illustrates the right-eye viewing areas 201R. Each left-eye viewing area 201L includes subpixels numbered 4 in the center of the area and the halves of subpixels numbered 3 and 5. Two subpixels are thus viewable in each left-eye viewing area 201L. Each right-eye viewing area 201R includes subpixels numbered 0 in the center of the area and the halves of subpixels numbered 7 and 1. Two subpixels are thus viewable in each right-eye viewing area 201R. The left-eye viewing areas 201L and the right-eye viewing areas 201R with subpixels located in this manner allow the user 13 to view a 3D image properly.

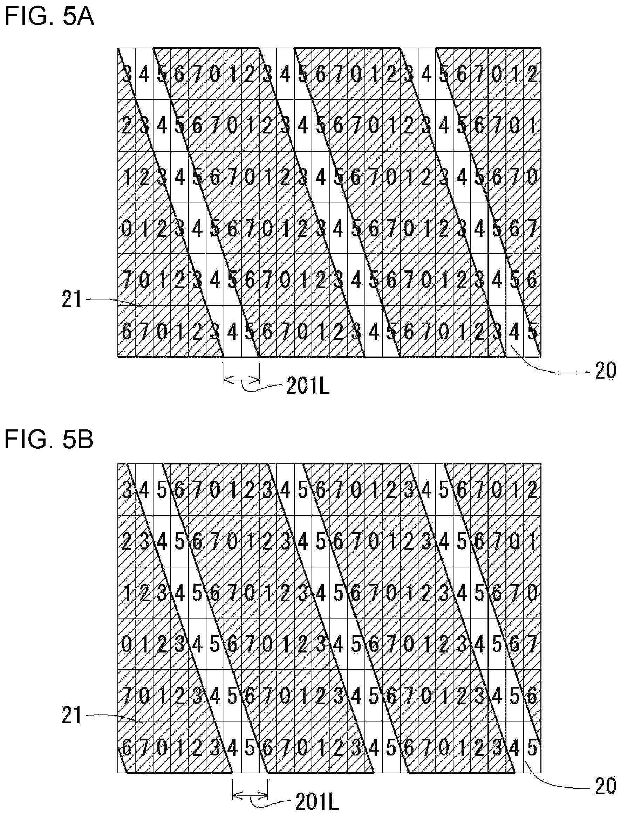

FIG. 5A is a schematic diagram of example left-eye viewing areas. For example, when neither a deviation nor distortion occurs in the relative positions of the display panel 20 and the barrier 21, or in the relative positions of the display panel 20, the optical element 18, and the windshield 25, as illustrated in FIG. 5A, each left-eye viewing area 201L includes subpixels numbered 4 in the center of the area and the halves of subpixels numbered 3 and 5. However, positional deviations in the manufacturing processes and positional deviations or distortion over time (hereafter referred to as deviations including manufacturing deviations and distortion) are unavoidable and may cause viewable subpixels in the left-eye viewing areas 201L to deviate as illustrated in FIG. 5B. Such a positional deviation may prevent the user 13 from properly viewing the 3D image. Thus, for example, the parallax image to appear on the display panel 20 may be corrected based on the deviation. Thus, deviations including manufacturing deviations and distortion are to be measured with a high-precision measurement device. Although the left-eye viewing areas 201L are described in the above example, the same applies to the right-eye viewing areas 201R.

In the present embodiment, the detector 50 further includes a second camera 11B and a third controller 22. The second camera 11B captures a second image. The second camera 11B captures images expected to be viewed by the user 13 for allowing the user 13 to check the images. The second camera 11B may be positioned to allow capturing of the parallax image reflected from the windshield 25 to capture a second image. For example, the second camera 11B may be located in the eye box 16. The second camera 11B may be located at any position, other than in the eye box 16, to allow an image reflected from the windshield 25 to be captured. The second camera 11B may be a visible light camera or an infrared camera similarly to the first camera 11A. The second camera 11B may function both as a visible light camera and an infrared camera. The second camera 11B may include, for example, a CCD image sensor or a CMOS image sensor.

An image reflected from the windshield 25 may be affected by deviations including manufacturing deviations and distortion. The second camera 11B captures and evaluates the affected image to correct the image to appear on the display panel 20 without directly measuring deviations including manufacturing deviations and distortion. The image appearing on the display panel 20 may be, for example, corrected based on a phase distribution.

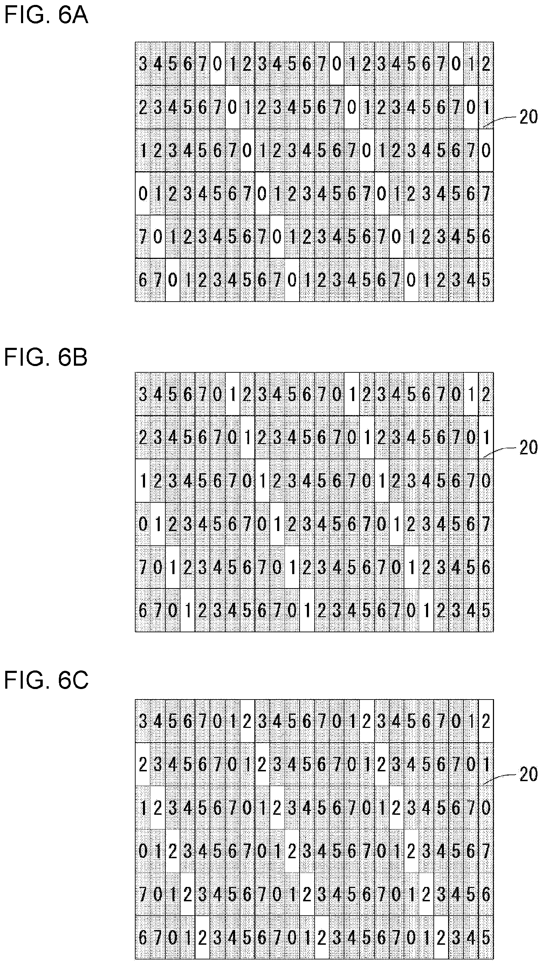

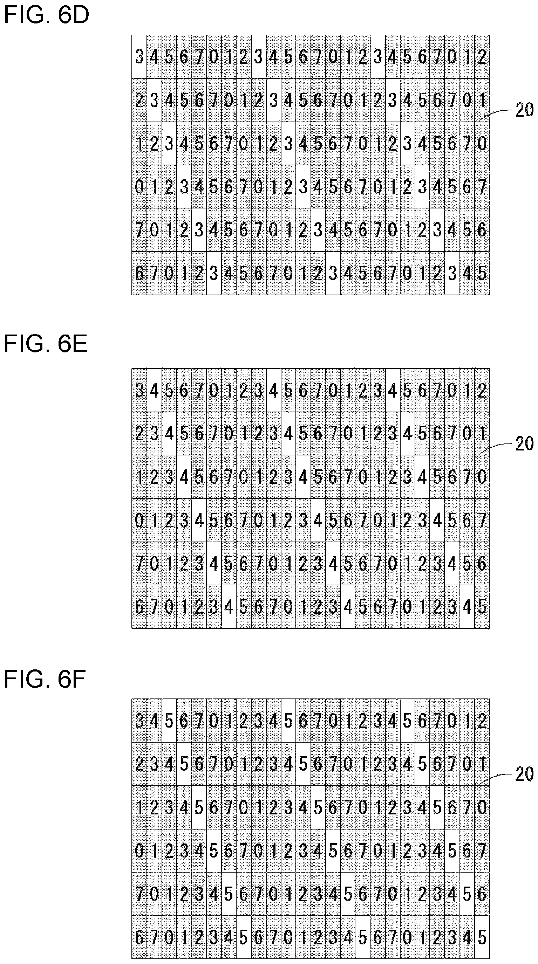

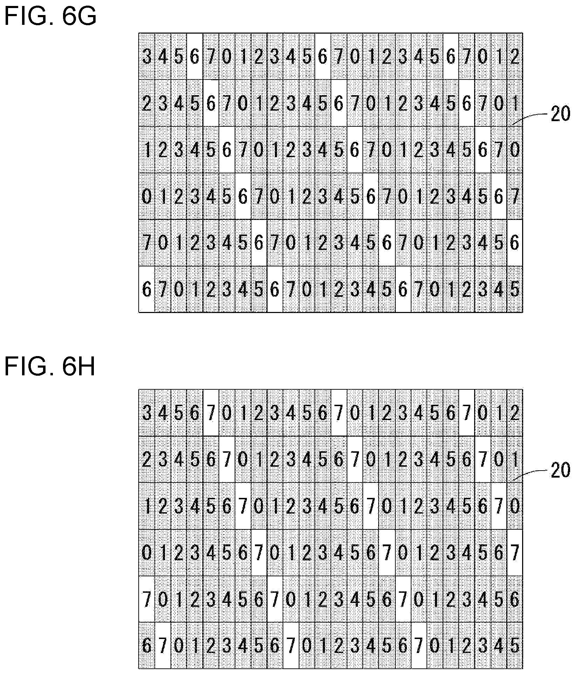

A phase value and a phase distribution will now be described. A phase value (first parameter) is obtained with, for example, the following procedure. The display panel 20 sequentially displays multiple test images. The second camera 11B sequentially captures the test images reflected from the windshield 25. FIGs. 6A to 6H each illustrate an example test image. For example, the test images appear in eight patterns, or patterns 0 to 7. The test image in the pattern 0 appears when the display panel 20 includes the subpixels numbered 0 turned on and the subpixels numbered 1 to 7 turned off. The test image in the pattern 1 appears when the display panel 20 includes the subpixels numbered 1 turned on and the subpixels numbered 0 and 2 to 7 turned off. The test images in patterns 2 to 7 appear in the same or similar manner. The second camera 11B sequentially captures these test images to obtain eight different second images. The luminance of the second image obtained by capturing the test image in each of the patterns 0 to 7 is extracted and associated with the test image in the corresponding pattern.

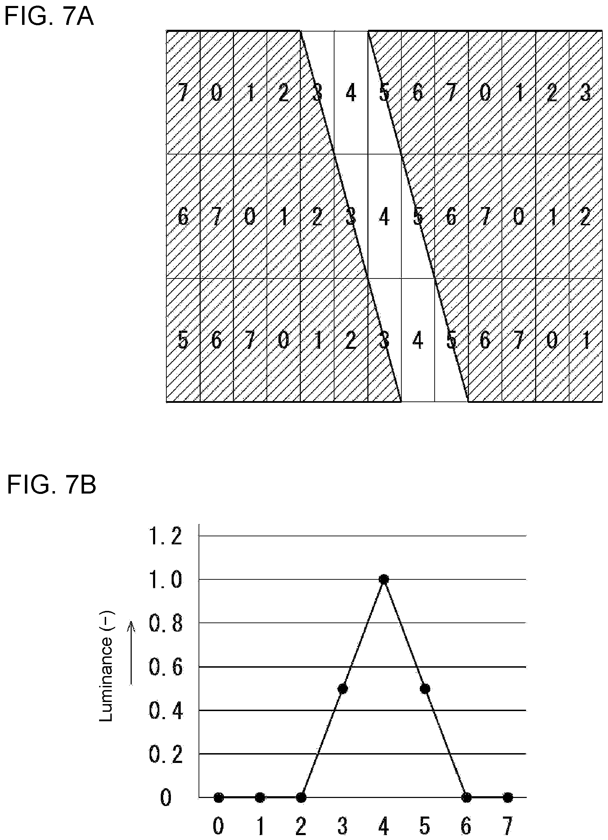

FIG. 7A is a diagram illustrating the positions of subpixels in the left-eye viewing area. FIG. 7B is a graph showing an example plot indicating luminance. When the subpixels in the left-eye viewing area 201L are located as illustrated in FIG. 7A, the relationship between the test image in each pattern and the luminance of the second image is plotted as in, for example, FIG. 7B. The subpixels numbered 4 are located in the center of the left-eye viewing area 201L. The maximum luminance is thus extracted from the second image obtained by capturing the test image in the pattern 4. The halves of the subpixels numbered 3 and 5 are located in the left-eye viewing area 201L. The luminance extracted from the second images obtained by capturing the test images in the patterns 3 and 5 is a half of the luminance from the image in the pattern 4. The other subpixels are located outside the left-eye viewing area 201L and are blocked by the barrier 21. The luminance of the second images obtained by capturing the test images in the patterns 0 to 2, 6, and 7 is thus zero.

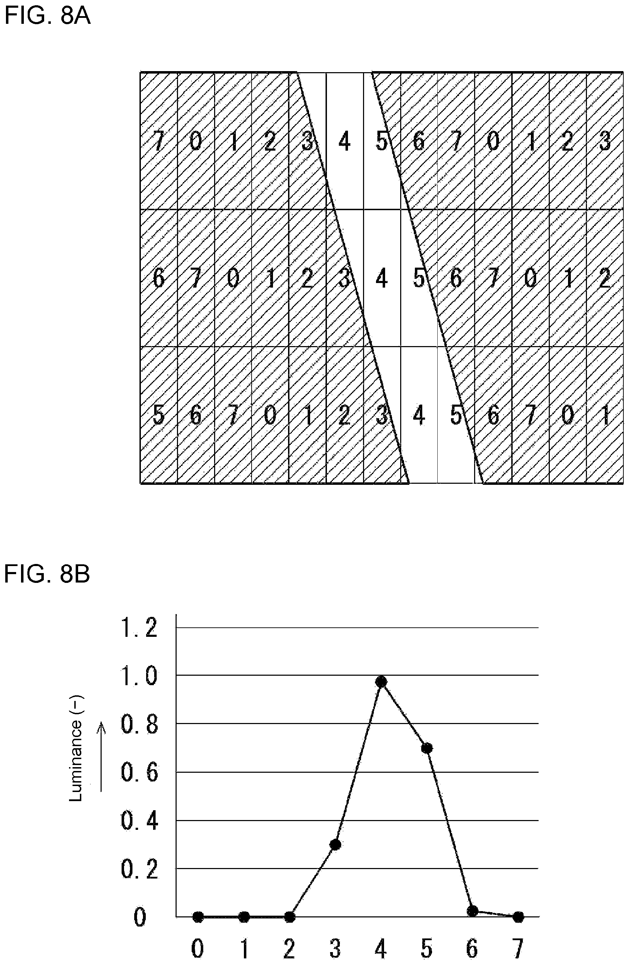

FIG. 8A is a diagram illustrating the positions of other example subpixels in the left-eye viewing area. FIG. 8B is a graph showing another example plot indicating luminance. When the subpixels in the left-eye viewing area 201L are located as illustrated in FIG. 8A due to deviations including manufacturing deviations and distortion, the relationship between the test image in each pattern and the luminance of the second image is plotted as in, for example, FIG. 8B. The subpixels numbered 4 deviate from the center of the left-eye viewing area 201L. About 70% of the subpixels numbered 5 are located in the left-eye viewing area 201L. About 30% of the subpixels numbered 3 are located in the left-eye viewing area 201L. Although the maximum luminance is extracted from the second image obtained by capturing the test image in the pattern 4, as in the example in FIG. 7B, the luminance extracted from the second image obtained by capturing the test image in the pattern 3 is about 30% of the luminance from the image in the pattern 4. The luminance extracted from the second image obtained by capturing the test image in the pattern 5 is about 70% of the luminance from the image in the pattern 4. The luminance plot in FIG. 8B differs from the luminance plot in FIG. 7B. The second camera 11B captures multiple test images with the fixed gain and exposure time to obtain the luminance plots.

In the present embodiment, a phase value is a parameter indicating the positional deviation of subpixels in the left-eye viewing area 201L (or right-eye viewing area 201R). When the subpixels are located as illustrated in, for example, FIG. 7A, the phase value is 4 without any deviation. FIG. 7B illustrates a luminance plot with a phase value of 4. Deviations including manufacturing deviations and distortion may cause the positions of the subpixels in the left-eye viewing area 201L (right-eye viewing area 201R) to deviate. When the subpixels are located as illustrated in, for example, FIG. 8A, the phase value is 4.7. FIG. 8B illustrates a luminance plot with a phase value of 4.7. The relationship between the phase value and the luminance plot may be predetermined based on, for example, experiments. This allows the third controller 22 to generate the luminance plot with the procedure described above and calculate the phase based on the luminance plot.

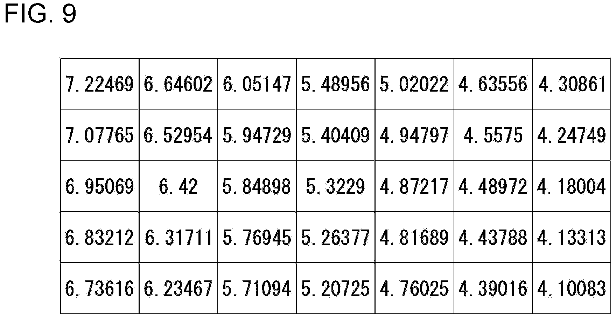

The third controller 22 calculates a phase value for each of all the subpixels on the display panel 20 and obtains the calculation results as a phase distribution. The parallax image to appear on the display panel 20 may be corrected based on the obtained phase distribution. As in the example of the phase distribution illustrated in FIG. 9, the third controller 22 may also divide the display surface 20a into multiple sections and calculate a representative value (phase value) for each section to obtain a distribution of representative values. In the example in the figure, the display surface 20a may be divided into 35 sections in 5 columns and 7 rows, and a representative phase value may be calculated for each section. Each representative value may be, for example, the phase value at the center of the section, or may be the phase value at a predetermined position other than the center. The coordinates indicating each representative value may be determined before the second camera 11B captures test images. For example, the subpixels at positions to be used for luminance extraction for representative value calculation are turned on. The coordinates of the positions of the on-state subpixels are then used as the coordinates indicating the representative value before the second camera 11B captures test images. After the second camera 11B captures the test images, the third controller 22 extracts the luminance at the coordinates indicating the representative value and creates luminance plots to calculate representative phase values.

The third controller 22 may store, for example, the calculated phase distribution into the storage 23. The second controller 24 can correct a parallax image to appear on the display panel 20 by referring to the phase distribution stored in the storage 23. When obtaining the distribution of the representative values, the second controller 24 can obtain the phase distribution covering all subpixels in the display panel 20 by applying the representative value of each section to the phase values of all subpixels in the section. As described above, deviations including manufacturing deviations and distortion may occur over time during the use of the movable body 10. Thus, the phase distribution stored in the storage 23 may be updated periodically. For example, the phase distribution may be updated during periodic vehicle inspections at maintenance workshops.

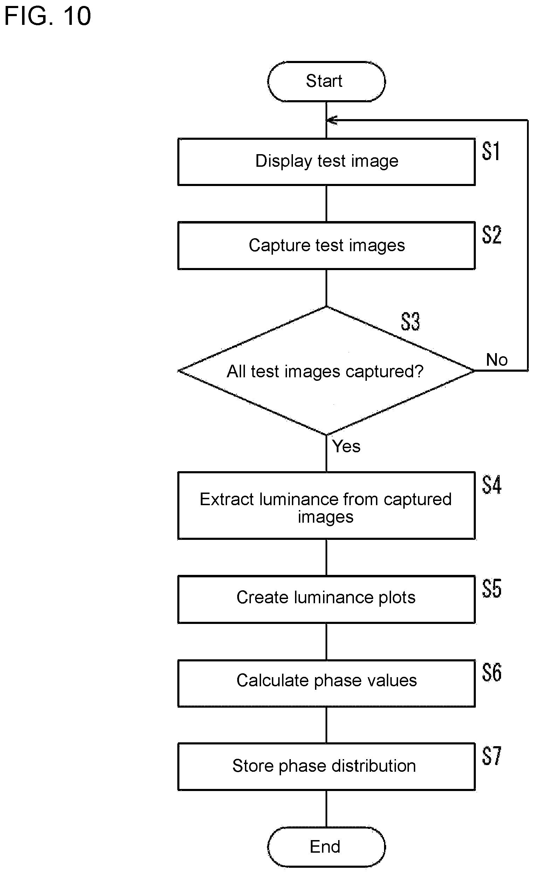

FIG. 10 is a flowchart of a setting process performed by the 3D image display system. Before the process starts, the second camera 11B is moved to a position to allow the parallax image reflected from the windshield 25 to be captured. The position at which the parallax image can be captured may be, for example, in the eye box 16. Once the setting process starts after the second camera 11B is moved to the image capturing position, the second controller 24 first causes the display panel 20 to display a test image in step S1. The test image is, for example, in the pattern 0. In step S2, the second camera 11B captures the test image in the pattern 0 to obtain the corresponding second image. In step S3, the determination is performed as to whether all the test images are captured. When all the test images are captured, the processing advances to step S4. When any test image is yet to be captured, the processing returns to step S1. At the time when the test image is captured in the pattern 0, some test images are yet to be captured. The test image in the subsequent pattern 1 thus appears in step S1. The test images appear sequentially in this manner and are sequentially captured by the second camera 11B. After the test images in all the patterns up to pattern 7 are captured, the processing advances to step S4 to extract the luminance from the captured images (second images). In step S5, luminance plots are created based on the extracted luminance. In step S6, the third controller 22 calculates phase values based on the created luminance plots. The relationships between the luminance plots and the phase values may be prestored in, for example, the storage 23. The third controller 22 may compare the created luminance plots with the luminance plots stored in the storage 23 and calculate phase values by, for example, pattern matching. In step S7, the third controller 22 stores the calculated phase values with the corresponding coordinates on the display panel 20 into the storage 23 as a phase distribution (second distribution). The third controller 22 updates a phase distribution (first distribution) stored in the storage 23 to the new phase distribution. The phase distribution (first distribution) stored in the storage 23 before the update is the phase distribution updated in the previous setting process. When no previous setting process is performed, the phase distribution (first distribution) stored in the storage 23 before the update is the phase distribution stored as an initial value.

As described above, the second controller 24 can correct a parallax image to appear on the display panel 20 by referring to the phase distribution stored in the storage 23. The phase distribution is the distribution with the eyes 5 of the user 13 at reference positions (at an optimum viewing distance). The phase distribution varies when the eyes 5 of the user 13 moves from the reference positions. The second controller 24 refers to the phase distribution stored in the storage 23 and increases or decreases the phase values from the referenced phase distribution based on the distance between the positions of the eyes 5 of the user 13 (first position) detected by the detector 50 and the reference positions. The second controller 24 may correct the parallax image to appear on the display panel 20 based on the phase values that have been increased or decreased.

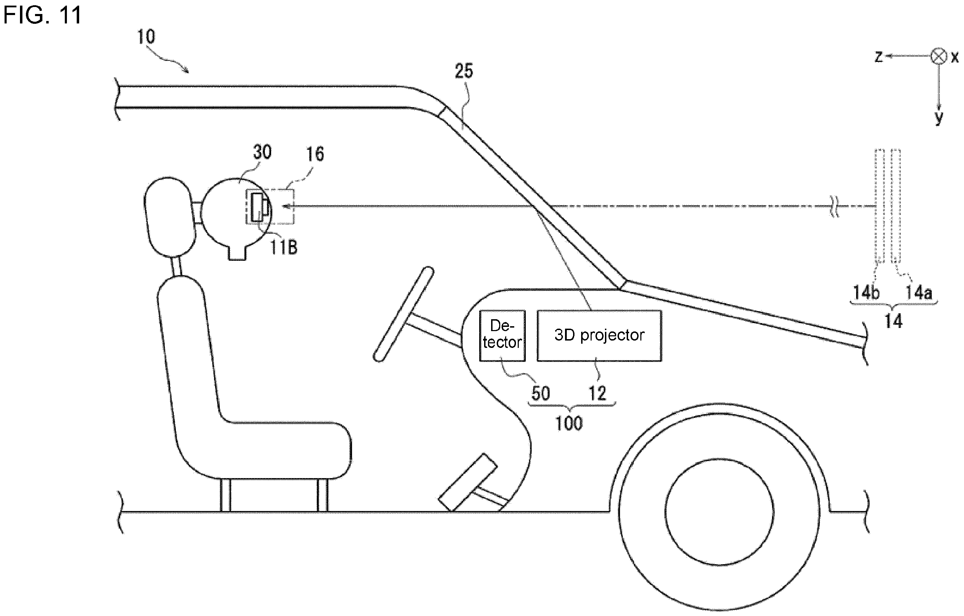

FIG. 11 is a schematic diagram of another example movable body incorporating the 3D image display system. Second images captured by the second camera 11B correspond to images viewable with the eyes 5 of the user 13. The position of the second camera 11B corresponds to the positions of the eyes 5 of the user 13. The phase values calculated based on the second images obtained by capturing the test images and the phase distribution are obtained when the eyes 5 of the user 13 are at the position of the second camera 11B. In the 3D image display system, the parallax image to appear on the display panel 20 changes in response to a change in the positions of the eyes 5 of the user 13. When the positions of the eyes 5 of the user 13 change and the phase distribution is unchanged, the parallax image based on the phase distribution may be corrected insufficiently depending on the positions of the eyes 5 of the user 13. This may prevent the user 13 from viewing the 3D image properly. With the position of the second camera 11B detected when the test images are captured, the phase distribution can be obtained based on the position of the second camera 11B. The position of the second camera 11B corresponds to the positions of the eyes 5 of the user 13. Thus, the first camera 11A can capture an image of the second camera 11B. When the test image appears on the display panel 20 to be captured by the second camera 11B, the first controller 15 detects the position of the second camera 11B as a second position based on the first image captured by the first camera 11A. The third controller 22 may calculate phase values based on the detected second position and obtain a phase distribution.

To detect the position of the second camera 11B, the first camera 11A is to be in operation. The structure in the present embodiment uses an object to which the second camera 11B is to be attached. With the second camera 11B attached to the object, the position of the second camera 11B is less likely to vary. The position of the second camera 11B is defined based on the position of the object. As illustrated in FIG. 11, for example, a head model 30 that resembles the head of the user 13 is placed as an object at a position being expected to include the head of the user 13, and the second camera 11B is attached at the position corresponding to the eyes of the head model 30. The position corresponding to the eyes of the head model 30 is determined when the head model 30 is placed. With the first controller 15 for detecting the position of the head model 30 without operating the first camera 11A, the first controller 15 indirectly detects the position of the second camera 11B based on the position of the head model 30. The first controller 15 may use the position of the head model 30 as the position of the second camera 11B. The position of the head model 30 may be prestored in, for example, the storage 23.

With the head model 30 used as in the present embodiment, the first controller 15 may calibrate the first camera 11A based on the position of the head model 30 to which the second camera 11B is attached. The first camera 11A may be calibrated before the second camera 11B is moved (attached to the head model 30) to capture the test images.

The structure according to the present disclosure is not limited to the structure described in the above embodiments, but may be changed or varied variously. For example, the functions of the components are reconfigurable unless any contradiction arises. Multiple components may be combined into a single unit, or a single component may be divided into separate units. For example, the first controller 15, the second controller 24, and the third controller 22 may be separate controllers. In another example, a single controller may function as at least two of the first controller 15, the second controller 24, or the third controller 22. In other words, a single controller may serve as two or more of these controllers. For example, the detector 50 including the first camera 11A and the second camera 11B may include a single controller that functions as the first controller 15 and the third controller 22.

The figures illustrating the configurations according to the present disclosure are schematic. The figures are not drawn to scale relative to the actual size of each component.

The present disclosure may be implemented in the following forms.
(1) In one embodiment of the present disclosure, a method is for setting a three-dimensional image display system. The three-dimensional image display system includes a display panel that displays a parallax image including a right-eye image and a left-eye image, an optical panel that defines a traveling direction of light for each of the right-eye image and the left-eye image, a reflective plate that reflects the right-eye image and the left-eye image with the traveling direction of light being defined, a first camera that captures a first image including an image of an area being expected to include a face of a user of the three-dimensional image display system, a second camera that captures a second image, a first controller that detects, based on the first image, a position of at least one of eyes of the user as a first position, a second controller that generates, based on a first distribution of a first parameter and the first position, the parallax image including the right-eye image and the left-eye image, and a third controller that calculates a second distribution of the first parameter. The method includes moving the second camera to a position to allow the parallax image reflected from the reflective plate to be captured, sequentially displaying a plurality of test images on the display panel and sequentially capturing, with the second camera, the plurality of test images reflected from the reflective plate to obtain a plurality of the second images, calculating the second distribution based on the plurality of second images, and replacing the first distribution with the calculated second distribution.
(2) With the method according to (1), the second camera captures the plurality of test images with a fixed gain and a fixed exposure time.
(3) With the method according to (1) or (2), the calculating, with the third controller, the second distribution includes extracting a luminance distribution from each of the plurality of test images, and calculating the second distribution based on the luminance distribution.
(4) With the method according to any one of (1) to (3), the second controller increases or decreases the first parameter from a value of the first distribution based on a distance between the first position and a reference position, and generates the parallax image including the right-eye image and the left-eye image corresponding to the increased or decreased first parameter.
(5) The method according to any one of (1) to (4) further includes detecting, based on the first image, positions of the second camera in the sequentially capturing the plurality of test images as second positions. The calculating, with the third controller, the second distribution of the first parameter includes calculating the second distribution based on the plurality of test images and at least one of the second positions.
(6) With the method according to claim (5), the second camera is attached to an object at a position detectable by the first controller, and the first controller detects the second positions indirectly based on the position of the object.
(7) With the method according to (6), the first controller calibrates the first camera based on the position of the object to which the second camera is attached.
(8) With the method according to (7), the calibrating the first camera is performed before the moving the second camera.
(9) With the method according to any one of (1) to (8), the three-dimensional image display system includes a single controller as at least two of the first controller, the second controller, or the third controller.
(10) With the method according to any one of (1) to (9), the three-dimensional image display system further includes an optical element that performs an optical process on the right-eye image and the left-eye image with the traveling direction of light being defined and to direct the right-eye image and the left-eye image to the reflective plate.

In one embodiment of the present disclosure, the method for setting the three-dimensional image display system allows the user to properly view a three-dimensional image.

In the present disclosure, first, second, or others are identifiers for distinguishing the components. The identifiers of the components distinguished with first, second, and others in the present disclosure are interchangeable. For example, the first eye can be interchangeable with the second eye. The identifiers are to be interchanged together. The components for which the identifiers are interchanged are also to be distinguished from one another. The identifiers may be eliminated. The components without such identifiers can be distinguished with reference numerals. The identifiers such as first and second in the present disclosure alone should not be used to determine the order of components or to suggest the existence of smaller number identifiers.

In the present disclosure, x-axis, y-axis, and z-axis are used for ease of explanation and may be interchangeable with one another. The orthogonal coordinate system including x-axis, y-axis, and z-axis is used to describe the structures according to the present disclosure. The positional relationship between the components in the present disclosure is not limited to being orthogonal.

### REFERENCE SIGNS

5 eye (5L: left eye, 5R: right eye)
10 movable body
11Afirst camera
11B second camera
12 3D projector
13 user
14 virtual image (14a: first virtual image, 14b: second virtual image)
15 first controller
16 eye box
17 3D display device
18 optical element (18a: first mirror, 18b: second mirror)
19 backlight
20 display panel (20a: display surface)
201L left-eye viewing area
201R right-eye viewing area
21 barrier
22 third controller
23 storage
24 second controller
25 windshield
30 head model
50 detector
100 3D image display system

## Claims

1. A method for setting a three-dimensional image display system including a display panel configured to display a parallax image including a right-eye image and a left-eye image, an optical panel configured to define a traveling direction of light for each of the right-eye image and the left-eye image, a reflective plate configured to reflect the right-eye image and the left-eye image with the traveling direction of light being defined, a first camera configured to capture a first image including an image of an area being expected to include a face of a user of the three-dimensional image display system, a second camera configured to capture a second image, a first controller configured to detect, based on the first image, a position of at least one of eyes of the user as a first position, a second controller configured to generate, based on a first distribution of a first parameter and the first position, the parallax image including the right-eye image and the left-eye image, and a third controller configured to calculate a second distribution of the first parameter, the method comprising:
moving the second camera to a position to allow the parallax image reflected from the reflective plate to be captured;
sequentially displaying a plurality of test images on the display panel, and sequentially capturing, with the second camera, the plurality of test images reflected from the reflective plate to obtain a plurality of the second images;
calculating the second distribution based on the plurality of second images; and
replacing the first distribution with the calculated second distribution.

2. The method according to claim 1, wherein
the second camera captures the plurality of test images with a fixed gain and a fixed exposure time.

3. The method according to claim 1 or claim 2, wherein
the calculating, with the third controller, the second distribution includes extracting a luminance distribution from each of the plurality of test images, and calculating the second distribution based on the luminance distribution.

4. The method according to any one of claims 1 to 3, wherein
the second controller increases or decreases the first parameter from a value of the first distribution based on a distance between the first position and a reference position, and
generates the parallax image including the right-eye image and the left-eye image corresponding to the increased or decreased first parameter.

5. The method according to any one of claims 1 to 4, further comprising:
detecting, based on the first image, positions of the second camera in the sequentially capturing the plurality of test images as second positions,
wherein the calculating, with the third controller, the second distribution of the first parameter includes calculating the second distribution based on the plurality of test images and at least one of the second positions.

6. The method according to claim 5, wherein
the second camera is attached to an object at a position detectable by the first controller, and
the first controller detects the second positions indirectly based on the position of the object.

7. The method according to claim 6, wherein
the first controller calibrates the first camera based on the position of the object to which the second camera is attached.

8. The method according to claim 7, wherein
the calibrating the first camera is performed before the moving the second camera.

9. The method according to any one of claims 1 to 8, wherein
the three-dimensional image display system includes a single controller as at least two of the first controller, the second controller, or the third controller.

10. The method according to any one of claims 1 to 9, wherein
the three-dimensional image display system further includes an optical element configured to perform an optical process on the right-eye image and the left-eye image with the traveling direction of light being defined and to direct the right-eye image and the left-eye image to the reflective plate.
